# EUROPEAN PATENT APPLICATION

(11) **EP 4 664 607 A1**
(43) Date of publication of application: **17.12.2025**
(21) Application number: 25181333.3
(22) Date of filing: 06.06.2025
(51) Int. Cl.: H01M 10/613, H01M 10/617, H01M 10/643, H01M 10/6556, H01M 10/6567, H01M 10/6568, H01M 50/213

(54) **BATTERY MODULE**

(30) Priority: 11.06.2024 GB 202408334
(71) Applicant: Fortescue Zero Limited, Kidlington Oxfordshire OX5 1GB (GB)
(72) Inventor: CROME, Andrew, Oxfordshire, OX5 1GB (GB); ORMSBY, Matthew, Oxfordshire, OX5 1GB (GB)
(74) Representative: Boult Wade Tennant LLP

(57) **Abstract**

There is described a battery module comprising: an array of battery cells electrically coupled to provide electrical power to a load; a cell space housing the array of battery cells, the cell space arranged to receive flow of a coolant fluid past the battery cells; the battery cells mounted on a base of the cell space, the base comprising one or more flow paths for the coolant fluid; one or more inlets to receive the coolant flow into either the cell space or the base; one or more outlets to deliver the coolant flow out of the other of the cell space or the base; and one or more fluid flow couplings between the cell space and the base to direct flow of coolant fluid between the base and the cell space. The inlets, outlets and fluid couplings may be arranged to provide counterflow cooling such that flow of coolant in the base is in the opposite direction to the flow of coolant in the cell space.

## Description

The present disclosure relates to a battery module, and in particular to a battery module having an array of battery cells cooled by fluid coolant.

### Introduction

Electrical power systems in which the electrical power source is comprised of one or more battery modules are commonly used in providing motive power in vehicles, boats, small aircraft and other modes of transportation and in industrial applications such as mining vehicles and equipment. The flexibility of such systems also makes them attractive as domestic and industrial power banks. One of the difficulties facing such battery fed electrical power systems is how to keep the battery cells in an optimal operating temperature range. The optimal temperature range will vary dependent on the cell chemistry. Hence, for some cell chemistries and applications the cells may need to be heated, whereas more commonly the cells need to be cooled. Overheated batteries age more quickly than optimally-cooled batteries, which for vehicles reduces their range, power and efficiency. In extreme examples, overheated batteries can result in safety problems.

Air-cooling of battery cells has been attempted but as the demands of battery modules have increased liquid-cooled systems have developed. However, prior art liquid-cooled have problems in providing optimized cooling across all cells. It would be desirable to address the problems and limitations of the prior art.

### Summary of the Invention

The present invention provides battery modules in which an array of battery cells are cooled by fluid coolant passing underneath the battery cells in a base and coolant flowing in a generally opposite direction through a cell space in which the cells are at least partly immersed.

Accordingly, the present invention provides a battery module comprising: an array of battery cells electrically coupled to provide electrical power to a load; a cell space housing the array of battery cells, the cell space arranged to receive flow of a coolant fluid past the battery cells; the battery cells being seated or mounted on a base of the cell space, the base comprising one or more flow paths for the coolant fluid; one or more inlets to receive the coolant flow into either the cell space or the base; one or more outlets to deliver the coolant flow out of the other of the cell space or the base; one or more fluid flow couplings between the cell space and the base to direct flow of coolant fluid between the base and the cell space. Preferably, the base cooling and cooling of the, at least partly, immersed cells are in counterflow to each other. For example, the same coolant fluid may flow in a first general direction past the base of the battery cells and then flow in a second general direction, such as opposite to the first, past the (at least partly) immersed cells in the cell space. The cell space may be formed in a housing or one or more parts of a housing, and may be sealed around the (at least partly immersed) battery cells. The cell space may be a sealed cell space housing the array of battery cells.

The one or more inlets, one or more outlets and one or more fluid couplings may be arranged to provide the counterflow cooling. For example, the inlet(s) and one or more fluid couplings may be arranged at opposite ends of the base or cell space and provide the first general flow direction, and the one or more fluid couplings and the outlet(s) may be arranged at opposite ends of the other of the base or cell space and provide the second general flow direction.

The one or more inlets and one or more outlets may be arranged at the same end of the battery module, such as adjacent to each other.

Ends of the battery cells of the array of battery cells may extend outside of the cell space, the ends of the battery cells comprising vents for releasing gas from the cells. The ends of the battery cells outside of the cell space may be the top (or cap) or base of the cells. Electrodes at the tops of the battery cells may also extend outside of the cell space or may be electrically sealed or insulated in the cell space, the electrodes being electrically connected to provide power to a load.

The one or more flow paths of the base may be below the battery cells, for example to provide axial cooling.

The one or more fluid flow couplings between the cell space and the base may be arranged to direct: the flow of coolant from the base to the cell space; or the flow of coolant from the cell space to the base.

The cell space and base may form distinct chambers, each having one or more flow paths.

The one or more flow paths in the base may be unidirectional or multidirectional, such as serpentine.

The base may be formed by a plate sandwiched to a housing. The housing may form at least the base of the cell space. The plate and housing may have the one or more flow paths for the coolant fluid there between.

One or more ridges may be arranged on the plate and/or the housing to provide one or more flow paths in the base.

The one or more fluid flow couplings may comprise one or more feed holes or openings, for example, into the housing. The one or more feed holes or openings may be arranged to couple fluid between the base and the cell space. The couplings may be integral in the battery module.

The one or more feed holes or openings may be arranged in an array at an end of the cell space and base distal to an end having the one or more inlets and one or more outlets. That is, the one or more feed holes or openings are towards an opposite end of the cell space and base compared to an end having the one or more inlets and outlets.

The array of one or more feed holes or openings at an end of the cell space may be distributed across the cell space transversely to a general coolant flow direction.

The one or more fluid flow couplings may comprise piping or an interface, such as a transfer manifold, having one or more conduits, the piping or interface connected to the base and the cell space to couple fluid between the base and the cell space. In this arrangement the coupling may be considered to be external to a baseplate and/or module housing.

The battery module may further comprise one or more intermediate position injectors, the one or more intermediate position injectors being one or more feed holes or openings arranged in an array at an intermediate position of the cell space and base between an end having the one or more inlets and an end having one or more outlets. For example, the intermediate position injectors may be arranged at around half way along the flow path in the base or cell space.

The battery cells may be cylindrical and the battery module may comprise one or more baffles arranged at the perimeter or edge of the array of battery cells, such as along a wall of the cell space. The one or more baffles may have a scalloped shape to equalize the space between the edge of the array of battery cells and a wall of the cell space.

The battery module may further comprise a plurality of ducts converging at one of the one or more outlets. For example, the plurality of ducts may fan out to receive coolant fluid at a plurality of distributed positions from across the battery array.

The battery module may comprise an upper cell holder and/or a lower cell holder. The tops of the battery cells of the array of battery cells may protrude through the upper cell holder. The upper cell holder may comprise a top-plate. The bottoms of the battery cells of the array of battery cells may be positioned on or in the lower cell holder, and the upper and lower cell holders may hold the battery cells in position in the array.

The present invention further provides a battery module system, comprising a battery module as set out herein, a heat exchanger for cooling the coolant fluid and a coolant pump. The heat exchanger may be connected to supply coolant fluid cooled by the heat exchanger to the battery module and receive heated coolant fluid from the battery module for cooling. The pump may be arranged to cycle the fluid coolant between the base and cell space for base and immersion cooling, repeatedly. The battery module system may comprise multiple battery modules electrically connected in series or parallel, such as to form a battery pack. The multiple battery modules may be thermally connected in series or parallel, for example, such that coolant flow paths divide the coolant between modules or flow the coolant in series from one module to another.

The heat exchanger and coolant pump may be arranged to flow the cooled coolant fluid to the base of the battery module and receive the heated coolant fluid from the cell space.

The battery module system may be configured to provide coolant flow rates of 1-10 litres per minute such as 2-4 litres per minute.

The battery module system may have a heat rejection of 0.1 to 2 kW with an average Heat Transfer Coefficient at the coolant of 5-300 W/m²/K.

The present invention further provides a battery module comprising: an array of battery cells electrically coupled to provide electrical power to a load; a cell space housing the array of battery cells, the cell space arranged to receive flow of a coolant fluid past the battery cells; the battery cells being seated or mounted on a base of the cell space, the base comprising one or more flow paths for coolant fluid; one or more first coolant inlets to receive coolant flow into the base and one or more first outlets to deliver the coolant flow out of the base; and one or more second coolant inlets to receive coolant flow into the cell space and one or more second outlets to deliver the coolant flow out of the cell space. The battery module may be included in a battery module system, further comprising a first heat exchanger and a first coolant pump and a second heat exchanger and a second coolant pump, wherein the first heat exchanger and first coolant pump are connected in a first flow circuit to supply coolant fluid to, and receive coolant fluid from, the cell space, and the second heat exchanger and second coolant pump are connected in a second flow circuit to supply coolant fluid to, and receive coolant fluid from, the base of the mattery module. Different coolant types may be used in the first coolant flow circuit (comprising the first heat exchanger and first coolant pump) compared to the second coolant flow circuit (comprising the second heat exchanger and second coolant pump. For example, the coolant for one flow circuit may be dielectric fluid and the for the other circuit may be water.

The one or more inlets, one or more outlets and one or more fluid couplings may be arranged to flow the coolant in the base in the opposite direction to the flow of coolant in the cell space.

The present invention further provides a battery module comprising: an array of battery cells; a sealed cell space in which a portion of each cell is housed, and arranged to receive flow of a coolant fluid past the battery cells, and each battery cell being mounted within a top plate that seals around the cell to contain the fluid in the cell space, a first end of each cell extending from the sealed cell space and having vents for releasing gas from the cells. The first end may be the cap or base of the cells. Electrode connection points may also extend outside of the cell space, or may be electrically sealed or insulated in the cell space, the electrode connection points being electrically coupled to provide electrical power to a load. The top plate may be part of the module housing or an upper cell holder. This arrangement may provide immersive cooling with features above as set out for the combined base-immersion cooling but without base cooling features.

### Brief Summary of the Drawings

Embodiments of the invention will now be described, by way of example only, with reference to the accompanying drawings of which:
Figure 1 is a perspective view of a battery module configured for fluid-cooling;
Figure 2 is an exploded perspective view of the battery module of figure 1;
Figure 3 is a cross-section view through the battery module of figure 1;
Figures 4a, 4b and 4c are schematic diagrams showing embodiments of flow paths through the battery module, with Figure 4a showing counter flow with an integrated coupling, figure 4b showing counter flow with an external coupling, and figure 4c showing an alternative arrangement with coolant flowing in counterflow through the base and the cell space but without linked flowpaths;
Figures 5a-5c are perspective and plan CFD images for base cooling only, immersion cooling only, and combined base and immersion cooling, respectively;
Figures 6a, 6b and 6c are plan views of three base coolant flow path layouts;
Figure 7 shows plan views of the cell space showing shaping or baffles along the length of the cell space (top inserts and centre) and couplings or openings in the floor for receiving coolant fluid from the base (bottom insert and centre);
Figures 8a and 8b are respectively plan and perspective views of an outlet manifold to guide coolant fluid that has passed through the cell space to the outlet; and
Figure 9 is a schematic block diagram of a battery module 100 with a cooling system.

### Detailed Description of Embodiments

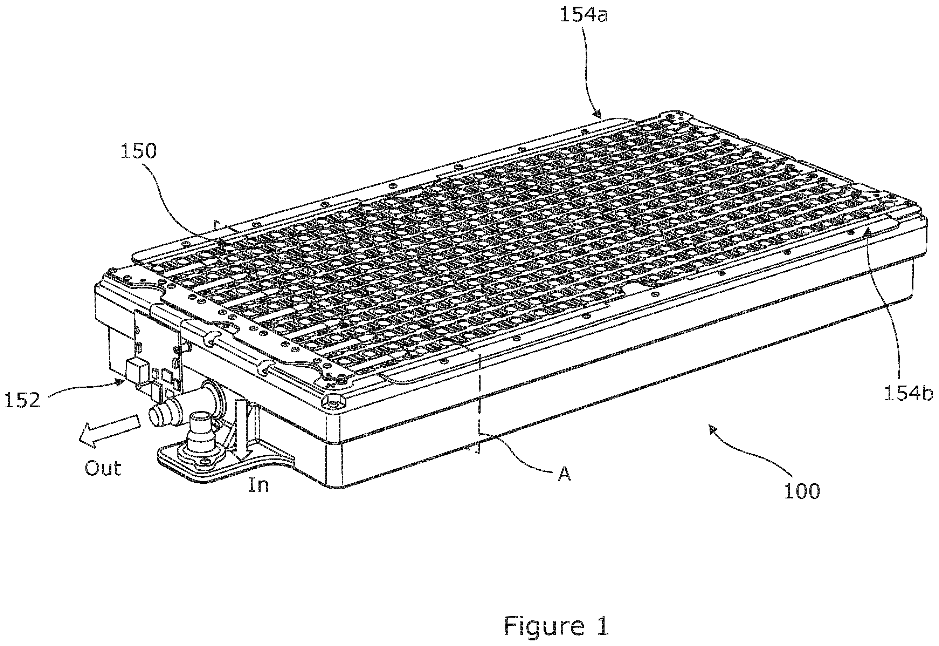

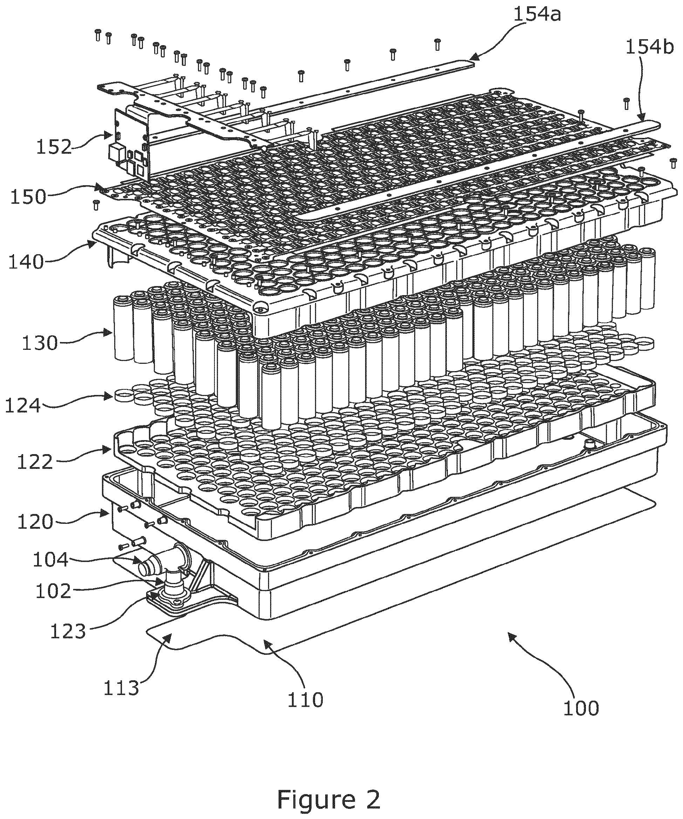

Figure 1 is a perspective view of a battery module 100 configured for fluid-cooling and figure 2 is an exploded perspective view of the battery module 100. As shown in figures 1 and 2 the battery module comprises a plurality of battery cells 130 arranged in an array in a cell space of the battery module. The battery module 100 comprises an inlet and an outlet for flowing coolant fluid through the battery module. A base having flow paths is formed under the cell space. Not shown in figures 1 and 2 are one or more fluid flow couplings between the base and cell space. Figure 1 also shows cell contacts 150 connecting the battery cells together and busbars 154a, 154b for outputting power to a load. A battery module or cell monitoring unit 152 can also been seen.

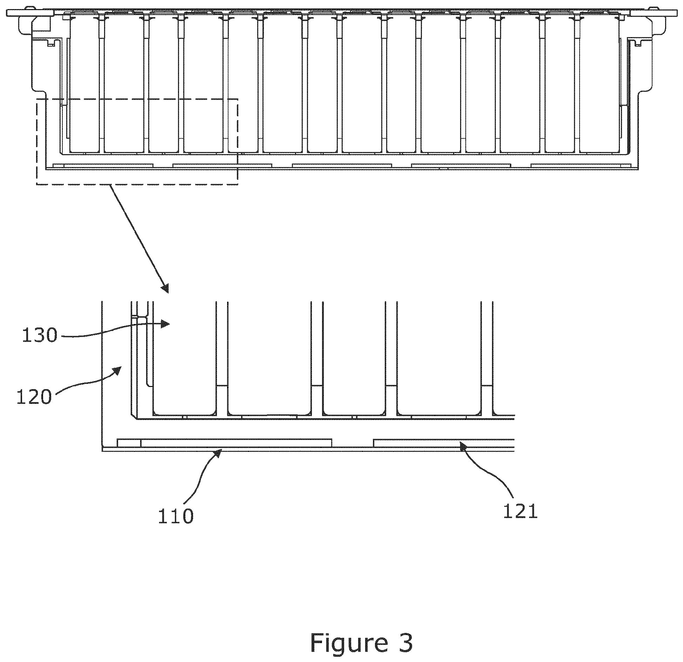

Referring to figure 2 we now describe the various elements of the battery module of figure 2. Starting at the base of the figure we see that the battery module comprises base plate 110 and housing 120. The base plate 110 may be a flat plate-type structure. Housing 120 may be a cast or machined tray-like part having side walls and floor. Figure 3 shows a cross-section through the battery module at the section indicated by "A" in figure 1. The housing 120 may include in the bottom face a series of recesses 121 as shown in the enlarged inset of figure 3. Baseplate 110 is also shown in figure 3. Together the baseplate 110 and recesses 121 form a base having channels therein that form flow paths. Housing 120 and baseplate 100 may also comprise tabs or extensions 113, 123, that extend from their basic, for example, rectangular outlines. The tab 113 of baseplate may be an extension of the plate. Tab 123 of housing includes in its underside a continuation of recesses 121. On the top side of the tab may be provided an inlet such as inlet spigot 102 or pipe. One of the side walls of the housing 120 may also comprise an outlet such as outlet spigot 104 or pipe. The outlet is preferably arranged in a side wall close to the inlet, such that the inlet and outlet are provided at the same side or side face of the housing 120. In this way the coolant may be easily provided from and returned to a chiller or heat exchanger for cooling coolant fluid. Other arrangements of base plate 110 and/or housing 120 providing a base with flow channels therein are possible.

Figure 2 also shows lower cell holder 122 into which the battery cells 130 are held. The cell holder may be formed of a polymer such as thermoplastic polyurethane (TPU). The cell holder 122 may be moulded with multiple recess for receiving the bases of the plurality of battery cells 130. The cells 130 may be cylindrical cells which are arranged in an array. The cells may be of the 21700 cell type but other types may be used. The cells may be fixed in the lower cell holder by an adhesive 124 or a thermal interface material (TIM) may be used to provide a good thermal contact to the base of the cells. On the figure, above the cells 130 is shown upper cell holder 140. The upper cell holder holds the upper part of the battery cells 130 and has apertures through which part of the cell protrudes above the cell holder. The upper cell holder 140 may be arranged such that the aperture is sized such that the top of the cylindrical cell protrudes through or sits in the aperture. Vents in the tops of the cells 130 are exposed to the atmosphere such that they may vent gases from the cells. The electrodes at the top of the cell also protrude through the aperture. The upper cell holder seals or is sealed around the cells, for example, by adhesive or sealant. Alternatively, a top-plate may seal or be sealed around the cells to seal and enclose the cell space. A laminated busbar 150 provides contacts to the cells. The cells are preferably arranged with a combination of series and parallel connections. For example, referring to figure 2, the cells may be connected in series in the shorter width direction of the battery modules, with the connections being by an array of first and second electrodes of the laminated busbar. The serially connected rows of cells are then connected in parallel by further electrodes of the laminated busbar 150. Connections from the cells to the series connected busbars may be by welding to positive and negative terminals of the cells. In some embodiments, the can or casing of the cell may form the negative or ground terminal and the negative electrode may be welded to that.

At the top of the battery module 100 are main busbars 154a and 154b. These busbars link the various other positive and negative connection busbars and provide the main electrical connections from the battery module to a load. Also shown in figure 2 is the cell monitoring unit (CMU) assembly 152 which may, for example, include sensors for monitoring one more physical parameters of the cells, such as voltage, current and temperature. The figure also shows a number of fixings such as screws used in assembling and putting together the battery module.

As discussed already, figure 3 shows a schematic cross-section through the battery module 100 at section A shown in figure 1. Together the housing 120 and baseplate 110 form base that comprises flow paths for coolant to flow through. Other configurations may be used to form a base having flow paths. For example, base plate could be formed of a sandwich of plates with ridges there between to provide a spacing for the flow paths. The sandwich of plates could then be attached to a housing having side walls and may or may not include a floor. Further alternative configurations are also possible that provide flow paths in a base. Figure 3 also shows battery cells 130 arranged in the battery module. The battery cells appear to be different sizes but this is not the case. The cross-section is taken in a plane showing a greater part of one series of rows of batteries than another series of rows of batteries. As can be seen in the figure the bottom or lower part of the battery cells are held in contact with, or close to, the base or floor of the housing, such that the bottom of the cells are cooled by coolant fluid flowing through the recesses 121 in the base or baseplate.

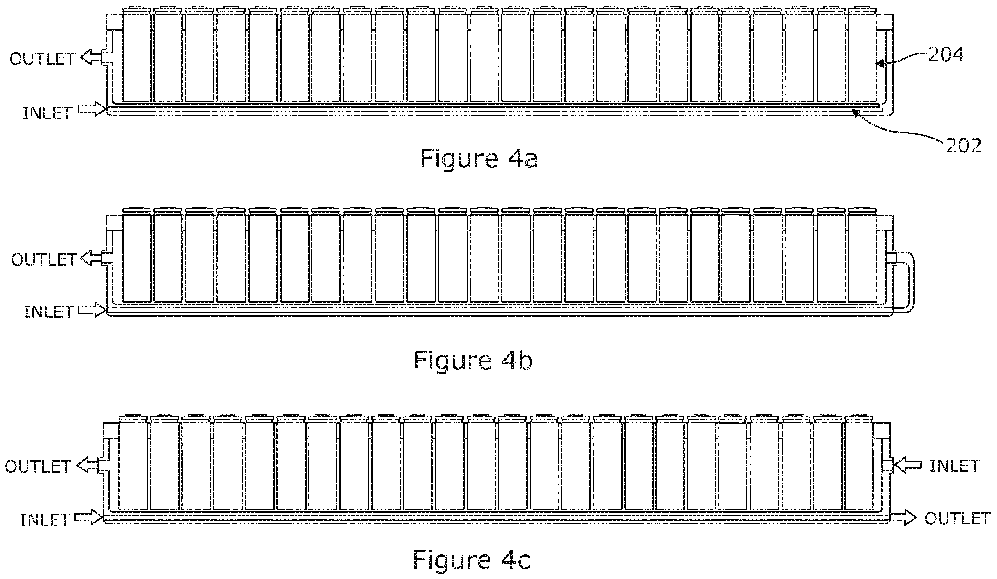

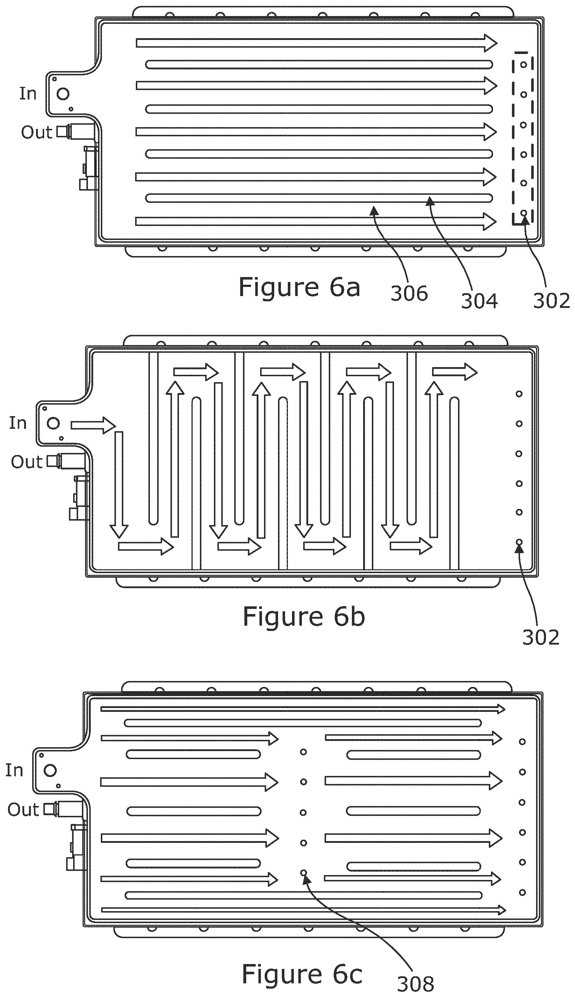

Figures 4a, 4b and 4c are schematic diagrams showing different embodiments of flow paths through the battery module 100. For figure 4a the flow path can be summarised as counter flow with an integrated coupling. In more detail, there are provided one or more flow paths 202 in the base of the battery module and the cell space 204. The cell space 204 provides one or more flow paths around the battery cells which are at least partly immersed in a coolant fluid in the cell space 204. The fluid inlet and outlet to the battery module are adjacently located such that coolant fluid may be easily cycled through a heat exchanger or chiller and returned to the battery module. In the arrangement of figure 4a the coolant fluid first flows through the base and provides base cooling and then flows through the cell space to provide immersion cooling. The base and immersion cooling are provided in counterflow with each other. As we will explain and show later, by having the dual cooling methods in counterflow, improved and more even cooling of the battery cell array can be achieved. As mentioned for figure 4a, the coupling from the base to the cell space is integrated within the battery module. The coupling may be by one or more holes or openings in the base that allows coolant fluid to flow from the base to the cell space. The arrangement of the one or more holes or opening will be discussed further in relation to figure 6. Although we have described the coolant flow as being first to the base for base cooling and then to the cell space for immersion cooling, this could be reversed such that coolant flow is first to the cell space and then to the base.

Figure 4b shows an alternative arrangement of cooling in which the coupling between the base and cell space is through an external component or interface such as piping or a manifold. For example, piping or manifold may allow greater design control of where the coolant fluid enters the cell space in the vertical direction. In the embodiment of figure 4a the coolant fluid enters at the floor of the cell space, whereas in figure 4b the coolant fluid can enter the cell space at approximately half way up the cell space. The external component(s) that are the coupling may be one or more pipes or a manifold. A manifold may conveniently be used for multiple coupling flow paths. In both figures 4a and 4b there is a single cooling circuit because the coolant fluid returns to a single heat exchanger or chiller.

Figure 4c shows a further alternative embodiment in which coolant flows through the base and the cell space but the counterflow paths are not linked. The cell space and base may be on separate cooling circuits. For example, dual cooling circuits may be provided, with a first cooling circuit flowing coolant fluid through the base and a first heat exchanger, and a second coolant circuit flowing coolant fluid through the cell space and a second heat exchanger.

With all of the embodiments shown in figures 4a, 4b and 4c multiple such battery modules may be required to provide sufficient power for the application such as automotive. When multiple battery modules are required, for the arrangements of figures 4a and 4b the coolant circuits may be connected in parallel with a single heat exchanger such that each battery module is cooled equally. Alternatively, if the number of battery modules is small, each may be provided with its own heat exchanger and cooling circuit. Combinations of the two may also be used. For the embodiment of figure 4c there are various possible arrangements for cooling circuit(s). For example, a cooling circuit may be arranged similarly to figure 4b. Alternatively, multiple battery modules may be connected together with coolant flowed through the bases of all of the modules first, followed by coolant flowed through the cell space of each of the modules. In such an arrangement, coolant may be flowed through the base of the modules in parallel and then flowed through the cell spaces in series or parallel. Other series or parallel cooling arrangements for the bases and cell spaces may be used. Furthermore, depending on the cooling requirements specific to the application, some modules may be cooled in preference to others. Another alternative for implementing the embodiment of figure 4c is to use two heat exchangers and cooling circuits, one for the base and one for the cell space for the one or more battery modules. In such an arrangement, different coolant fluids may be used for the two cooling circuits. Water may be used for base cooling, whereas a dielectric fluid may be used for the cell space. In all of these arrangements counterflow of coolant between the base and cell space is preferred.

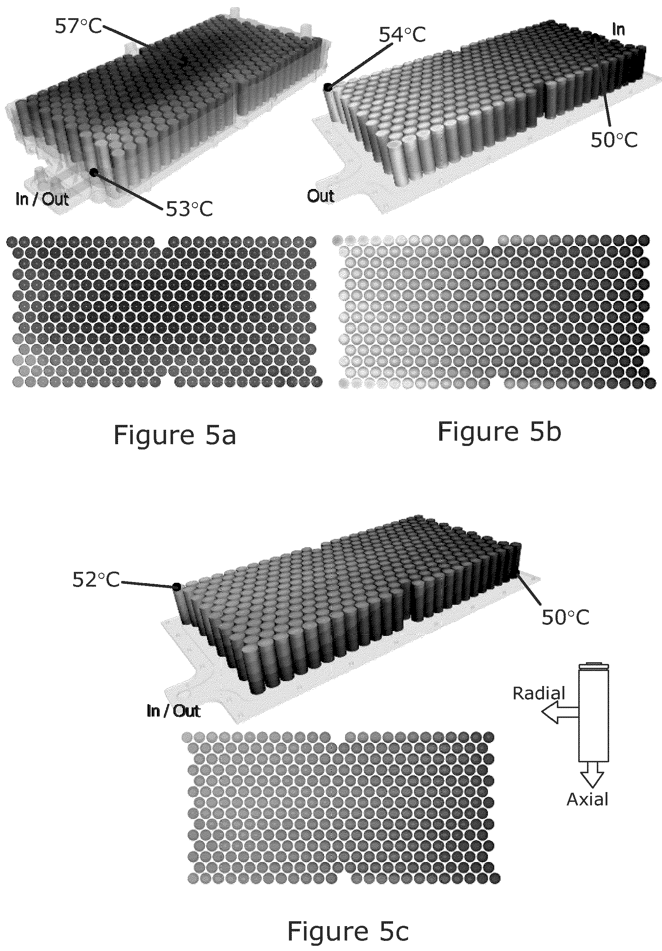

Figures 5a-5c are heat maps showing the improvement in cooling of counterflow combined base and immersion cooling versus base cooling only and immersion cooling only. These are simulated results, starting with an initial coolant inlet temperature of 50°C in each case and a heat generation of 0.53W for each cell. In each of the figures the lighter areas represent cooler regions and the darker regions represent hotter regions. Each of the figures includes a perspective view showing the heat distribution from the top to the bottom of the cells. A plan view in each figure and the perspective view show the heat distribution across the plan area of the battery module. The inlet and outlet are adjacently located in each of figures 5a and 5c, but in figure 5b the inlet and outlet are on opposite sides of the battery module.

Figure 5a shows the heat distribution for a battery module with base cooling only. The flow path is a serpentine configuration in the base of the battery module. The serpentine flow aims to provide balanced cooling across the module. In the perspective view the battery cells in the corner of the module nearest to the inlet and outlet are coolest. This can also be seen in the plan view. The lower half of the battery cells in the corner near the inlet and outlet are also cooler than the tops of the battery cells. However, base cooling alone is not very effective with substantial areas of dark shading indicating much of the battery module, if not the whole of the battery module, are poorly cooled. The range of temperatures from the coolest to the hottest in figure 5a is from around 53°C to around 57°C.

Figure 5b shows the heat distribution for a battery module with immersion cooling only. The flow is straight from one side of the battery module, the inlet side, to the opposite side of the battery module, the outlet side. In figure 5b the perspective view shows that there is less variation from top to bottom of the battery cells. The cooling is also more efficient than for the base cooling of figure 5a. Many of the battery cells are well-cooled but the cooling reduces closer to the outlet as the coolant fluid warms. Also poorer coolant flow in the corners at the outlet side results in these corners being warmest. Across the battery module the temperatures range from around 50°C close to the inlet to around 54°C in the corners at the outlet side. Hence, this arrangement of immersion cooling may be considered to be effective but not well-balanced.

Figure 5c shows the heat distribution for a battery module with combined base cooling and immersion cooling in a counterflow configuration, such as described in relation to figures 2 and 4a. The coolant fluid enters the inlet and first flows through the base plate in a straight line flow path to the other end of the battery module. The bases of the cells on the left hand side of the figures are cooled first. Following base-cooling, the coolant fluid is fed into the cell space via an array of opening or holes. The immersed cells are then cooled with the coolant flowing through the cell space in the opposite direction to the flow in the base. The heat maps show the combined cooling in counterflow is effective with balanced cooling across the battery module. The range of temperatures from the coolest to the hottest in figure 5c are from around 50°C to around 52°C. That is only a two degree Celsius variation. The balanced cooling is achieved through the inlet / outlet end of the battery module receiving the coolant at its coolest and its warmest due to receiving coolant to the base at its coolest from a heat exchanger and also receiving coolant that has been heated by passing through much of the rest of the battery module base and cell space. The right hand side of the battery module in figure 5c receives partly warmed coolant and warms it further. Hence, balanced cooling of the battery module is achieved.

The inset of figure 5c shows a battery cell. Cooling of the battery cells may be considered to be radial or axial and the different cooling directions may have different thermal conductivities. For base cooling, the cooling is axial only. Hence, the arrangement of figure 5a has axial cooling only. For immersion cooling, the cooling is radial. Hence, the arrangement of figure 5b has radial cooling only. For the combined base and immersion cooling of figure 5c, both axial and radial cooling is present which helps achieve the improved cooling over base or immersion cooling alone.

Figures 6a, 6b and 6c show embodiments of base coolant flow path layouts. In relation to figure 2 we described that the base, such as comprised of baseplate 110 and housing 120, had flow paths which flowed the coolant from one end of the base to the other. The layouts shown in figures 6a, 6b and 6c maybe considered as the view of channels machined or fabricated in to the underside of the floor of housing 120, although as previously discussed other ways of making the channels are possible.

Figure 6a shows a uniform unidirectional arrangement which was used for the simulation result of figure 5c. The inlet is provided on a tab or extension and is where coolant flows into the base. A series of ridges 304 are shown which have been left by machining away the recesses 306 in the bottom of the housing. In the embodiment of figure 6a the ridges are straight and extend along much of the length direction of the base. For example, greater than 70%, such as around 80%, of the length of the internal flow cavity in the housing. At each end there is a distribution area which allows the coolant entering the flow space to be split among the different flow paths provided by the ridges and to be recombined from the different flow paths at the other end. In figure 6a five flow channels are shown but other numbers of channels may be provided. Figure 6a also shows one or more openings or apertures for coupling the coolant fluid into the cell space above. In figure 6a six openings are shown and each opening comprises a hole such as a circular hole. The size of the holes will be a factor in determining how quickly the coolant flows through the base. The holes are evenly spaced across the width of the base but the first and last holes may be stepped in from the edges. Other numbers of holes, shapes of holes and layout of holes are possible. The geometry of the flow paths controls the transition of coolant fluid from the inlet to the immersion cell space.

Figure 6b shows an alternative scheme for flow paths in the base. In this arrangement a single flow path with a serpentine path is provided. Recesses are machined to form a series of ridges extending transversely across the general flow direction. The ridges alternately extend from one side then the other leaving a gap at one end for the coolant to flow in to the next portion of the serpentine. In figure 6b the serpentine includes eight changes in direction, two to the left and two to the right (as viewed from the inlet). Other numbers of changes of direction may be provided. Each end of the base includes a space to allow the coolant fluid to flow into the required area. At the inlet end the coolant spreads across the width of the flow path. At the end close to couplings/holes to the cell space, the distribution area is larger than for figure 6a to allow the coolant fluid to spread evenly across the array of holes. A smaller distribution area might lead to more of the flow occurring through the holes closest to the end of the serpentine.

Figure 6c shows a further alternative flow scheme. This scheme is similar to figure 6a but allows some variability in flow direction. Compared to figure 6a six flow unidirectional flow paths are included instead of five. As viewed from the inlet, the flow paths in the middle of the base are wider than those at the edges. Again the flow paths are separated by ridges. The outer ridges and flow paths extend up to 70% or 80% of the length of the base. The central flow paths also have ridges but these are broken at the middle region. A further array of holes or openings 308 is provided at this middle region for injecting coolant fluid from the base to the cell space. The break in the ridges provides a middle distribution region to allow five holes or openings 308 to be distributed across the space of four flow paths. Other numbers of middle region injector holes 308 and flow paths may be included but by including a middle distribution region, a greater or lesser number of holes compared to the number of flow paths may be provided. In other embodiments more arrays of holes or openings to the cell space may be included such as a first array one third of the way along the base, a second array at two thirds of the way along the base and a third array at the end of the base.

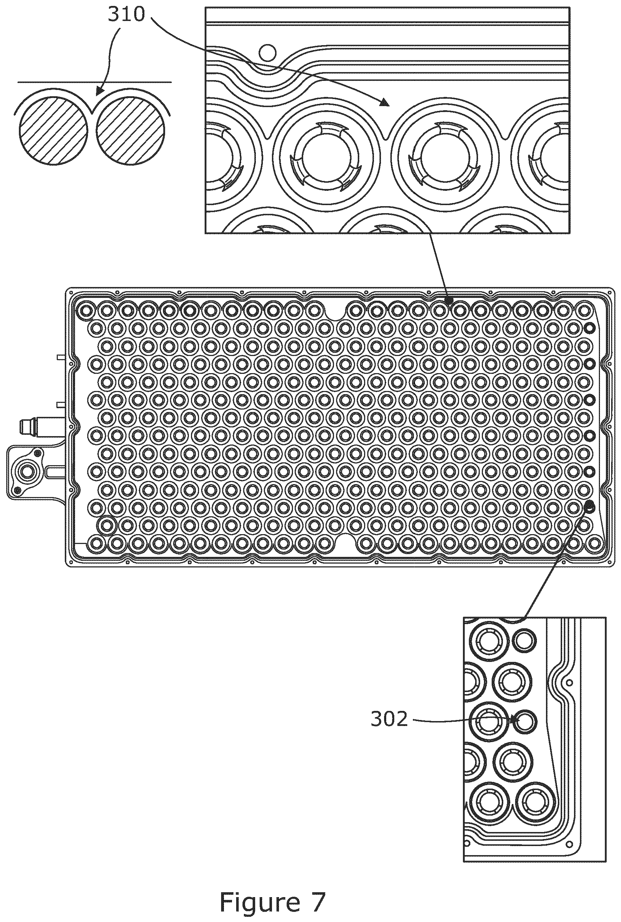

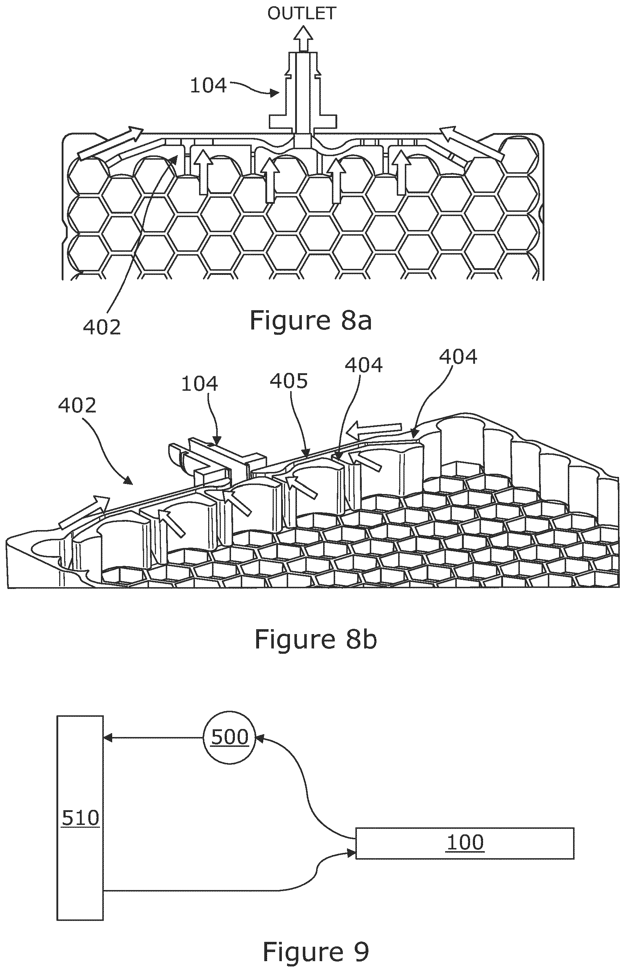

Figures 7, 8a and 8b show features of the cell space in which cooling of the battery cells is performed by immersion cooling. Figure 7 shows couplings or openings in the floor or base of the cell space for coolant fluid to flow into the cell space from the base (see centre figure and lower inset figure). Figure 7 also shows baffles at the edge of the array (see centre figure, upper inset and line drawing). As can be seen the couplings 302 may be aligned with the array of battery cells. For example, the battery cells may be arranged on a hexagonal array with six battery cells positioned on the apex of a hexagon and seventh cell positioned in the centre of the hexagon. This configuration may be repeated across the array. The couplings or openings may be positions at locations corresponding to battery cell array locations but where the cells are not included. Hence, as shown in figure 7 six couplings or openings are included aligned with rows of battery cells in the array. This location provides a convenient and space efficient position for the openings. The geometry is integrated into the floor of the housing. The openings control the transition of coolant fluid from the base to the immersion cavity. The number, size and position of openings or couplings can vary from that shown in figure 7.

Figure 7 also shows shaping or baffles along the length or long sides of the cell space corresponding to the general flow direction. The shaping of baffles control flow at the periphery of the cell space to balance the flow in the edge regions. A simple rectangular or straight side to the cell space, depending on the gap to the cells might either encourage fluid flow at the edges or substantially block fluid flow at the edges. In the former case, having too much fluid flow at the edges would mean less flow between the battery cells thereby reducing the cooling effect. In the latter case, blocking of fluid flow at the edges could mean that the cells at the edges are not cooled effectively. The baffles or shaping at the edge of the cell space corresponds to the outline shape of the array of cells. Hence, the shaping may be a scalloped shape 310 comprising a series of arcs of circles which may be centred on but slightly larger than the battery cells at the end of the array. The spacing between the battery cells at the edge of the array and the baffle is preferably similar to the minimum spacing between battery cells in the array. The inclusion of the baffles substantially equalises the flow rate at the edges of the array of the battery cells with the flow rate in between battery cells within the array. In embodiments, the cooling requirements at the edge of the array may be different to that within the array, in such a case the spacing between the baffles and the cells may be more or less than the spacing in the array so as to equalise the temperature at the edges of the array with the temperature in the array.

Figures 8a and 8b show an outlet manifold 402 configured to guide and collect the coolant fluid that has passed through the cell space as it moves to the outlet. Figure 8a is a plan view of the outlet manifold and figure 8b is a perspective view of the outlet manifold. Both figures are with the battery cells removed. The manifold may be formed integrally as part of the housing. The manifold comprises a plurality of ducts 404 collecting coolant fluid from across the width of the cell space to direct the coolant fluid to outlet such as outlet spigot 104. In figures 8a and 8b, from the outlet six ducts are spaced across the width of the cell space fanning out from the outlet. The outer two ducts are angled to the general flow direction to guide coolant fluid from the edges of the cell space. The central four ducts open to the cell space in the general flow direction. The ducts from one side of the cell space combine into a first main duct 405 which links to the outlet, and ducts from the other side of the cell space combine into a second main duct that links to the outlet. The outer ducts connect to one of the main ducts which may be aligned transversely to the general flow direction. The central four ducts connect at around 90° to one of the main ducts. The ducts extend from the top to the bottom of the cell space. The outlet spigot may be configured to receive piping such as rubber or plastic piping for flowing the fluid coolant in the cooling circuit.

Figure 9 is a schematic block diagram of a battery module 100 with a cooling system. The battery module 100 is connected at its coolant fluid outlet to a pump which circulates the coolant fluid through the coolant system. Coolant from the pump enters a heat exchanger which for automotive applications may be a radiator. The hot coolant passes through the radiator or heat exchanger 510 and cools down. If a radiator is used, a fan may force ambient air through the radiator to cool the coolant. Cooled coolant leaves the radiator or heat exchanger and flows back to the battery module to cool the cells therein. As discussed above in relation to the embodiment of figure 4c other cooling systems may be used including multiple cooling circuits.

In an embodiment of the present invention, the battery cells are 21700 type cylindrical cells arranged in a 14S24P configuration. That is, cells are arranged in rows of 14 connected in series, with each row of 14 connected in parallel to other rows of 14 cells. In total 24 rows of cells are connected in parallel totalling 336 cells. Other numbers and arrangements of cells are possible. As can be seen in various of the figures the rows of cells may not have the cells arranged in a straight line but may be arranged in a zig-zag or offset arrangement to match the hexagonal based array arrangement. 21700 type cells are a type of lithium-ion battery cell often designated 21700 NMC to indicate a nickel, manganese and cobalt cathode. The 21700 cells have a nominal output voltage of around 3.7V and up to a maximum of 4.2V when fully charged. The array of 336 cells provides an output of between 35.0 and 58.8V and may have a total energy capacity of 5.1kWh. A battery module comprising these cells and arranged as in the embodiments described herein may have a length of around 670mm, a width of around 330mm and a height of around 90-100mm. The dry mass of the battery module is around 35kg. The cooling medium of the battery module is preferably dielectric fluid so as to effectively be an insulator between cells. For the embodiments described by figures 4a and 6a the base has a capacity or volume of 2 to 4 litres such as 2.5 to 3.0 litres and typically 2.9 litres. The cell space with immersion cooling has a much smaller coolant volume such as less than 1 litre and for example, less than 0.5 litres, and typically 0.3 litres. Accordingly, a total typical coolant volume for the battery module may be 3.2 litres. Flow rates through the battery module may be 1-5 litres/minute, for example 2.5 to 3.5 litres/minute and typically 2.9 litres/minute. In the arrangements shown the cells may have a total immersed volume of 5.7 litres with a base cooled cell surface area of 0.2m². The total immersed cell surface area may be 1.1 m².

Although specific embodiments of the invention have been described with reference to the drawings, the skilled person will be aware that variations and modifications may be applied to these embodiments without departing from the scope of the invention as defined in the claims. For example, although the embodiments shown in the figures include one inlet and one outlet, other numbers of inlets and outlets may be provided.

Another variation may be to use different cell formats and arrangements. We have described that the tops of the cells may extend out of the sealed cell space to allow venting of gas from the cells and connection to the electrical connection points of the cells. In alternative embodiments connection to the electrical connection points of the cells may be made in the sealed cell space with the electrical connection points and connections sealed or insulated in the cell space.

Furthermore, an embodiment in which immersive cooling without base cooling is possible. In such a case couplings would be replaced with one or more inlets at the opposite end of the cell space to the one or more outlets.

Embodiments of the present invention are set out in the following clauses:
Clause A1. A battery module comprising:
   an array of battery cells electrically coupled to provide electrical power to a load;
   a cell space housing the array of battery cells, the cell space arranged to receive flow of a coolant fluid past the battery cells;
   the battery cells mounted on a base of the cell space, the base comprising one or more flow paths for the coolant fluid;
   one or more inlets to receive the coolant flow into either the cell space or the base;
   one or more outlets to deliver the coolant flow out of the other of the cell space or the base;
   one or more fluid flow couplings between the cell space and the base to direct flow of coolant fluid between the base and the cell space.
Clause A2. The battery module of clause A1, wherein the one or more inlets, one or more outlets and one or more fluid couplings are arranged to provide counterflow cooling such that flow of coolant in the base is in the opposite direction to the flow of coolant in the cell space.
Clause A3. The battery module of clause A1 or clause A2, wherein the one or more inlets and one or more outlets are arranged at the same end of the module.
Clause A4. The battery module of any of clauses A1 to A3, wherein the tops of the battery cells of the array of battery cells extend outside the cell space, the tops of the battery cells comprising vents for releasing gas from the cells..
Clause A5. The battery module of any of clauses A1 to A4, wherein the tops of the battery cells of the array of battery cells extend outside the cell space, electrodes at the tops of the battery cells being electrically connected for providing power to a load.
Clause A6. The battery module of any of clauses A1 to A5, wherein the one or more flow paths of the base are below the battery cells.
Clause A7. The battery module of any of clauses A1 to A6, wherein the one or more fluid flow couplings between the cell space and the base are arranged to direct:
   the flow of coolant from the base to the cell space; or
   the flow of coolant from the cell space to the base.
Clause A8. The battery module of any of clauses A1 to A7, wherein the cell space and base form distinct chambers, each having one or more flow paths.
Clause A9. The battery module of any of clauses A1 to A8, wherein the one of more flow paths in the base are unidirectional or serpentine.
Clause A10. The battery module of any of clauses A1 to A9, wherein the base is formed by a plate sandwiched to a housing, the housing forming at least the base of the cell space, the plate and housing having the one or more flow paths for the coolant fluid there between.
Clause A11. The battery module of clause A10, wherein one or more ridges are arranged on the plate and/or the housing to provide one or more flow paths in the base.
Clause A12. The battery module of any of clauses A1 to A11, wherein the one or more fluid flow couplings comprise one or more feed holes or openings, the one or more feed holes or openings arranged to couple fluid between the base and the cell space.
Clause A13. The battery module of clause A12, wherein the one or more feed holes or openings are arranged in an array at an end of the cell space and base distal to an end having the one or more inlets and one or more outlets.
Clause A14 The battery module of clause A12, wherein the array of one or more feed holes or openings at an end of the cell space are distributed across the cell space transversely to a general coolant flow direction.
Clause A15. The battery module of any of clauses A1 to A11, wherein the one or more fluid flow couplings comprise piping or an interface having one or more conduits, the piping or interface connected to the base and the cell space to couple fluid between the base and the cell space.
Clause A16. The battery module of any of clauses A1 to A15, further comprising one or more intermediate position injectors, the one or more intermediate position injectors being one or more feed holes or openings, the one or more feed holes or openings arranged in an array at an intermediate position of the cell space and base between an end having the one or more inlets and an end having one or more outlets.
Clause A17. The battery module of any of clauses A1 to A16, wherein the battery cells are cylindrical, the battery module comprising one or more baffles arranged at the edge of the cell space, the one or more baffles having a scalloped shape to equalize the space between the edge of the array of battery cells and a wall of the cell space.
Clause A18. The battery module of any of clauses A1 to A17, further comprising a plurality of ducts converging at one of the one or more outlets, the plurality of ducts fanning out to receive coolant fluid at a plurality of distributed positions from across the battery array.
Clause A19. The battery module of any of clauses A1 to A18, comprising an upper cell holder and a lower cell holder, the tops of the battery cells of the array of battery cells protruding through the upper cell holder, the bottoms of the battery cells of the array of battery cells positioned on or in the lower cell holder, and the upper and lower cell holders holding the battery cells in position in the array.
Clause B20. A battery module system, comprising the battery module of any of clauses A1 to A19, a heat exchanger for cooling the coolant fluid and a coolant pump, wherein the heat exchanger is connected to supply coolant fluid cooled by the heat exchanger to the battery module and receive heated coolant fluid from the battery module for cooling. Clause B21. The battery module system of clause B20, wherein the heat exchanger and coolant pump are arranged to flow the cooled coolant fluid to the base of the battery module and receive the heated coolant fluid from the cell space.
Clause B22. The battery module system of clause B20 or B21, configured to provide coolant flow rates of 1-10 litres per minute such as 2-4 litres per minute.
Clause C23. A battery module comprising:
   an array of battery cells electrically coupled to provide electrical power to a load;
   a cell space housing the array of battery cells, the cell space arranged to receive flow of a coolant fluid past the battery cells;
   the battery cells being seated or mounted on a base of the cell space, the base comprising one or more flow paths for coolant fluid;
   one or more first coolant inlets to receive coolant flow into the base and one or more first outlets to deliver the coolant flow out of the base; and
   one or more second coolant inlets to receive coolant flow into the cell space and one or more second outlets to deliver the coolant flow out of the cell space.
Clause C24. A battery module system, comprising the battery module of clause C23, a first heat exchanger and a first coolant pump and a second heat exchanger and a second coolant pump, wherein the first heat exchanger and first coolant pump are connected in a first flow circuit to supply coolant fluid to, and receive coolant fluid from, the cell space, and the second heat exchanger and second coolant pump are connected in a second flow circuit to supply coolant fluid to, and receive coolant fluid from, the base of the mattery module.
Clause C25. The battery module system of clause C24, wherein the inlets and outlets are arranged to flow the coolant in the base in the opposite direction to the flow of coolant in the cell space.
Clause D26. A battery module comprising:
   an array of battery cells;
   a sealed cell space in which a portion of each cell is housed, and arranged to receive flow of a coolant fluid past the battery cells, and
   each battery cell being mounted within a top plate that seals around the cell to contain the fluid in the cell space, a first end of each cell extending from the sealed cell space and having vents for releasing gas from the cells.
Clause D27. The battery module of clause D26, wherein the first end of each cell extending from the sealed cell space further comprises electrode connection points electrically coupled to provide electrical power to a load.

## Claims

1. A battery module comprising:
an array of battery cells electrically coupled to provide electrical power to a load;
a cell space housing the array of battery cells, the cell space arranged to receive flow of a coolant fluid past the battery cells;
the battery cells mounted on a base of the cell space, the base comprising one or more flow paths for the coolant fluid;
one or more inlets to receive the coolant flow into either the cell space or the base;
one or more outlets to deliver the coolant flow out of the other of the cell space or the base;
one or more fluid flow couplings between the cell space and the base to direct flow of coolant fluid between the base and the cell space.

2. The battery module of claim 1, wherein the one or more inlets, one or more outlets and one or more fluid couplings are arranged to provide counterflow cooling such that flow of coolant in the base is in the opposite direction to the flow of coolant in the cell space.

3. The battery module of claim 1 or claim 2, wherein the one or more inlets and one or more outlets are arranged at the same end of the module.

4. The battery module of any preceding claim, wherein the tops of the battery cells of the array of battery cells extend outside the cell space, and/or
the tops of the battery cells comprising vents for releasing gas from the cells; and/or electrodes at the tops of the battery cells being electrically connected for providing power to a load.

5. The battery module of any preceding claim, wherein the one or more fluid flow couplings between the cell space and the base are arranged to direct:
the flow of coolant from the base to the cell space; or
the flow of coolant from the cell space to the base.

6. The battery module of any preceding claim, wherein the one or more flow paths of the base are below the battery cells and/or the cell space and base form distinct chambers, each having one or more flow paths.

7. The battery module of any of preceding claim, wherein the one of more flow paths in the base are unidirectional or serpentine.

8. The battery module of any preceding claim, wherein the base is formed by a plate sandwiched to a housing, the housing forming at least the base of the cell space, the plate and housing having the one or more flow paths for the coolant fluid there between, and
optionally, wherein one or more ridges are arranged on the plate and/or the housing to provide one or more flow paths in the base.

9. The battery module of any preceding claim, wherein the one or more fluid flow couplings comprise one or more feed holes or openings, the one or more feed holes or openings arranged to couple fluid between the base and the cell space.

10. The battery module of claim 12, wherein the one or more feed holes or openings are arranged in an array at an end of the cell space and base distal to an end having the one or more inlets and one or more outlets, or
wherein the array of one or more feed holes or openings at an end of the cell space are distributed across the cell space transversely to a general coolant flow direction.

11. The battery module of any of claims 1 to 8, wherein the one or more fluid flow couplings comprise piping or an interface having one or more conduits, the piping or interface connected to the base and the cell space to couple fluid between the base and the cell space.

12. The battery module of any preceding claim, further comprising one or more intermediate position injectors, the one or more intermediate position injectors being one or more feed holes or openings, the one or more feed holes or openings arranged in an array at an intermediate position of the cell space and base between an end having the one or more inlets and an end having one or more outlets.

13. The battery module of any preceding claim, wherein the battery cells are cylindrical, the battery module comprising one or more baffles arranged at the edge of the cell space, the one or more baffles having a scalloped shape to equalize the space between the edge of the array of battery cells and a wall of the cell space.

14. The battery module of any preceding claim, further comprising a plurality of ducts converging at one of the one or more outlets, the plurality of ducts fanning out to receive coolant fluid at a plurality of distributed positions from across the battery array.

15. The battery module of any preceding claim, comprising an upper cell holder and a lower cell holder, the tops of the battery cells of the array of battery cells protruding through the upper cell holder, the bottoms of the battery cells of the array of battery cells positioned on or in the lower cell holder, and the upper and lower cell holders holding the battery cells in position in the array.
